# EUROPÄISCHE PATENTSCHRIFT

(11) **EP 1 971 055 B1**
(45) Veröffentlichungstag und Bekanntmachung des Hinweises auf die Patenterteilung: **10.08.2016**
(21) Anmeldenummer: 08000998.8
(22) Anmeldetag: 19.01.2008
(51) Int. Cl.: H04J 3/06, H04Q 9/00

(54) **VERFAHREN ZUR DURCHFÜHRUNG EINER KOMMUNIKATION ZWISCHEN DEN SENSORKNOTEN EINES FUNK-SENSORNETZWERKES**
METHOD FOR COMMUNICATING BETWEEN SENSOR NODES OF A WIRELESS SENSOR NETWORK
PROCÉDÉ D'EXÉCUTION D'UNE COMMUNICATION ENTRE LES NOEUDS DU CAPTEUR D'UN RÉSEAU DE CAPTEURS RADIO

(30) Priorität: 14.03.2007 DE 102007012995
(43) Veröffentlichungstag der Anmeldung: 17.09.2008
(73) Patentinhaber: ista International GmbH, 45131 Essen (DE)
(72) Erfinder: Bley, Bert, 45130 Essen (DE); Gronauer, Manfred, 97084 Würzburg (DE)
(74) Vertreter: Cohausz Hannig Borkowski Wißgott

(56) Entgegenhaltungen:
- EP-A1- 1 705 620
- WO-A1-2006/067271
- US-A- 5 673 252

## Beschreibung

Die Erfindung betrifft ein Verfahren zur Durchführung einer Kommunikation zwischen wenigstens zwei Sensorknoten einer Liegenschaft oder zwischen den Sensorknoten einer Liegenschaft und wenigstens einem zumindest temporären Datensammelknoten, bei dem einer der Knoten, insbesondere in im wesentlichen periodischen gleichen Zeitabständen, wenigstens ein Synchronisationstelegramm aussendet, und wenigstens ein anderer Knoten ein Synchronisationstelegramm empfängt, insbesondere durch Öffnen eines zeitlichen Empfangsfenster für den Empfang von Synchronisationstelegrammen, wonach zwischen den Knoten eine bidirektionale Funkkommunikation erfolgt.

Eine derartige Kommunikation ist allgemein bekannt, z.B. in Sensornetzwerken beispielsweise in solchen Netzwerken, bei denen die Sensorknoten durch Verbrauchserfassungsgeräte, z.B. Heizkostenverteiler einer Wohnungsliegenschaft gebildet werden. Ebenso kann ein derartiges Verfahren bei sämtlichen anderen Arten von Sensorknoten durchgeführt werden, die dafür vorgesehen sind, einen Messwert zu erfassen und gegebenenfalls zu speichern und diesen Messwert weiterzukommunizieren oder gegebenenfalls ein Ereignis zu erfassen und dieses weiterzukommunizieren.

Hierbei kann es vorgesehen sein, insbesondere bei der Anwendung von Heizkostenverteilern oder auch sonstiger Verbrauchserfassungsgeräte als Sensorknoten, dass einer der Knoten, z.B. ein Sensorknoten im Wesentlichen in gleichen periodischen Zeitabständen die Synchronisationstelegramme aussendet, um seine Kommunikationsbereitschaft anzuzeigen. Die Aussendung von Synchronisationstelegrammen kann ebenso statt von einem Sensorknoten auch von einem Datensammelknoten ausgehen. Für die Einleitung einer Kommunikation ist es lediglich wichtig, dass einer der Knoten (Sensorknoten oder Datensammelknoten), die miteinander kommunizieren wollen, wie beschrieben das wenigstens eine Synchronisationstelegramm aussendet.
Unabhängig davon, ob von einem Knoten Synchronisationstelegramme periodisch nach gleichen Zeitabständen ausgesendet werden oder zu unbestimmten Zeiten, beispielsweise nach Erfassung eines Messwertes oder nach einem Ereignis kann es bei diesen oder anderen Ausführungen auch vorgesehen sein, dass ein anderer Knoten, z.B. ein Datensammelknoten (oder alternativ bei umgekehrter Kommunikationsinitiierung auch ein Sensorknoten) entweder zumindest temporär in dauerhafter Empfangsbereitschaft ist oder in anderer bekannter Weise ebenso periodisch nach bestimmten Zeitabständen ein Empfangsfenster öffnet für den Empfang von Synchronisationstelegrammen, die von dem genannten einen Knoten ausgesendet wurden.
Bei der Öffnung von periodisch wiederkehrenden zeitlichen Empfangsfenstern ist es dabei üblicherweise vorgesehen, dass ein Knoten, der von einem anderen Knoten Daten empfangen soll, sein Empfangsfenster dann öffnet, wenn die Aussendung von Synchronisationstelegrammen erwartet wird. Über einen solchen erwarteten Zeitpunkt liegen einem Knoten üblicherweise Informationen gespeichert vor, die z.B. aus vorherigen Kommunikationen, insbesondere mit demselben anderen Knoten stammen können.
Bei allen diesen, im Stand der Technik bekannten Ausführungsvarianten ist die Aussendung und der Empfang eines Synchronisationstelegramms vorgesehen, um zwei Knoten untereinander zu synchronisieren und somit eine bidirektionale Funkkommunikation durchzuführen, insbesondere um Daten von einem Knoten (z.B. Sensorknoten) an einen anderen Knoten (z.B. Datensammelknoten) zu übertragen.

EP1705620 (ista Shared Services) offenbart den Oberbegriff des Anspruchs 1. So wird im Rahmen dieser Beschreibung unter einem Datensammelknoten ein solcher Knoten verstanden, an den Daten über Messergebnisse oder Ereignisse übertragen werden, insbesondere zwecks zentraler weiterer Verarbeitung. Unter einem Sensorknoten werden Knoten verstanden, die geeignet sind, Messergebnisse oder Ereignisse zu sensieren. Solche Sensorknoten können dabei einer Liegenschaft zugeordnet sein, was bedeuten kann, dass diese z.B. in einer Liegenschaft angeordnet sind oder auch ausserhalb einer Liegenschaft, z.B. an Versorgungsleitungen, die zu einer Liegenschaft führen.

Unter einem Synchronisationstelegramm wird hier eine Funkaussendung von einem Knoten, z.B. einem Sensorknoten oder auch einem Datensammelknoten verstanden, die nur minimale Daten umfasst, um eine bidirektionale Kommunikation einzuleiten, also die Synchronität zwischen den Knoten, die kommunizieren wollen, zu erzielen. Dies hat den Hintergrund, dass Knoten der eingangs genannten Art, insbesondere Sensorknoten üblicherweise nur eine interne Energieversorgung aufweisen, z.B. eine Batterie, so dass für die Erreichung einer möglichst langen Lebensdauer energiesparend bei der Aussendung und beim Empfang von Synchronisationstelegrammen vorgegangen werden muss.

So dient die Aussendung von Synchronisationstelegrammen (eines einzelnen oder auch einer Gruppe von Synchronisationstelegrammen) eines Knotens im Wesentlichen dazu, anderen Knoten in der Empfangsumgebung die Kommunikationsbereitschaft anzuzeigen und um sodann die Kommunikation durchzuführen.

Um dies auszutesten, kann es vorgesehen sein, dass ein Knoten unmittelbar nach Aussendung wenigstens eines Synchronisationstelegramms selbst ein zeitlich vorbestimmtes Empfangsfenster öffnet, um zu horchen, z.B. um in ein Netzwerk hineinzuhorchen, ob ein anderer Knoten nach Empfang des ausgesandten Synchronisationstelegramms antwortet. Erfolgt keine Antwort bzw. wird eine solche nicht mit Sicherheit festgestellt bzw. empfangen, so wird, insbesondere in der Anwendung von Verbrauchserfassungsgeräten, wie Heizkostenverteilern, ein Knoten erst nach Ablauf der vorbestimmten Zeitdauer wenigstens ein erneutes Synchronisationstelegramm senden.

Wird hingegen von einem Knoten die durch den antwortenden Knoten ausgesandte Antwort empfangen, so kann die Kommunikation zwischen den betreffenden Knoten z.B. gemäß eines vorbestimmten Sende- und Empfangsprotokolls durchgeführt werden.

Hierbei kann, z.B. in Sensornetzwerken der bekannten Art, die Problematik auftreten, dass die bidirektionale Funkkommunikation zwischen zwei Knoten nicht vollständig beendet werden kann.

Beispielsweise kann ein solches Problem entstehen bei sich ändernden Sende- und Empfangsbedingungen, so dass zwar eine Kommunikation zwischen zwei Knoten eingeleitet, jedoch nicht bis zum Ende fortgeführt werden konnte, da sich die Sende- und Empfangsbedingungen zwischenzeitlich geändert, insbesondere verschlechtert haben. Ein solches Problem wird auch als Fading bezeichnet und kann z.B. entstehen, wenn die Sende- und Empfangswege durch sich bewegende Gegenstände oder Personen beeinflusst, z.B. abgeschattet werden.

Eine solche Problematik kann ebenso auftreten, wenn die in einem internen Energiespeicher eines Knotens bereitgestellte Energie nicht zum Versenden und/oder Empfangen aller, für die Kommunikation vorgesehener Daten ausreicht. Beispielsweise kann es in Knoten vorgesehen sein, dass durch eine interne Energiequelle, wie beispielsweise eine Batterie, ein Zwischenspeicher geladen wird, mit dessen zwischengespeicherter Energie der Sende- und Empfangsvorgang durchgeführt wird. Steht eine zu große Menge von zu versendenden und/oder zu empfangenden Daten an, so kann es vorkommen, dass die intern gespeicherte Energie hierfür nicht ausreicht, so dass hierdurch die Kommunikation unterbrochen werden kann.

Ebenso können auch noch andere denkbare Effekte zum Abbruch oder zu einer hierzu gleichwertig zu sehenden Unterbrechung einer Kommunikation führen. Z.B. wenn einer der Knoten zunächst vor einer weiteren Datenversendung eine bestimmte Aktion ausführen muss oder soll, z.B. eine Messung durchführen.

Im Stand der Technik war es bei den vorgenannten Problemen üblicherweise der Fall, dass ein Knoten die Aussendung seiner Daten zu einem späteren Zeitpunkt von Anfang an neu versucht, nämlich insbesondere dadurch, dass nach einer vorbestimmten Zeit, insbesondere dem eingangs genannten periodischen Zeitabstand, die Aussendung wenigstens eines Synchronisationstelegramms erfolgt.

Hierbei wurden aufgrund der nicht vollständigen Kommunikation die eventuell vor dem Abbruch/ der Unterbrechung der Kommunikation ausgetauschten Daten als nicht zuverlässig verworfen, so dass der gesamte Kommunikationsvorgang von Anfang an erst nach einer Wartezeit, die dem eingangs genannten periodischen Zeitabstand entspricht, erneut begonnen werden kann.

Hierdurch wird zum einen der Datenaustausch zeitlich verzögert und Funkverbindungen, z.B. in einem Funknetzwerk von Sensorknoten, unnötig belastet, insbesondere somit Kommunikationsbandbreite ungenutzt verschenkt.

Aufgabe der Erfindung ist es, die Kommunikationsbandbreite zwischen Knoten, insbesondere auch in einem Sensornetzwerk, besser auszunutzen, insbesondere die benötigte Bandbreite zu reduzieren oder eine zur Verfügung stehende Bandbreite effizienter auszunutzen und das wiederholte Versenden der auszutauschenden Daten von Anfang an zu vermeiden.

Gelöst wird diese Aufgabe dadurch, dass bei einem eingangs genannten gattungsgemäßen Verfahren in dem Fall einer nicht vollendeten Funkkommunikation einer der beiden Knoten, zwischen denen die bisherige Kommunikation erfolgte wenigstens ein Resynchronisationstelegramm aussendet, um die Kommunikation mit dem anderen Knoten wieder aufzunehmen.

Wesentlicher Gedanke hierbei ist es, dass nach einer eventuell unterbrochenen Funkkommunikation, beispielsweise aus den eingangs genannten Gründen, wie sich ändernder Funkbedingungen oder nicht ausreichender Energie, die Übertragung von Daten, sei dies z.B. von einem Sensorknoten zu einem Datensammelknoten oder auch von einem Datensammelknoten zu einem Sensorknoten, fortgeführt werden kann, d.h. nicht von Anfang an wieder erneut begonnen werden muss.

Hierbei kann es in einer Ausführung vorgesehen sein, dass das wenigstens eine Resynchronisationstelegramm von dem Knoten ausgesendet wird, welcher zur Kommunikationseinleitung zuvor das wenigstens eine Synchronisationstelegramm gesendet hat. Alternativ kann es auch vorgesehen sein, dass das wenigstens eine Resynchronisationstelegramm von dem Knoten ausgesendet wird, welcher zur Kommunikationseinleitung zuvor das wenigstens eine Synchronisationstelegramm empfangen hat.

Beispielsweise kann es vorgesehen sein, dass durch den Empfang eines Synchronisationstelegramms der das Synchronisationstelegramm empfangende Knoten in einen den Kommunikationsbeginn kennzeichnenden Status versetzt wird. Beispielsweise kann hierfür eine innere Protokolluhr oder auch eine sogenannte State-Machine zurückgesetzt werden in einen Ausgangsstatus bzw. eine definierte Anfangsbedingung. In gleicher Weise kann durch die Aussendung des Synchronisationstelegramm auch der das Synchronisationstelegramm sendende Knoten in denselben oder einen analogen Zustand gesetzt werden.

Hierbei kann es sich bei der internen Protokolluhr um eine tatsächliche Uhr oder einen Timer handeln, der z.B. auf Null gesetzt wird oder es kann sich auch um ein Protokoll-Logbuch handeln, welches bei Kommunikationsbeginn gelöscht bzw. in einen definierten Anfangszustand versetzt wird. So erfolgt dies bei einem Knoten jedes Mal, wenn ein Synchronisationstelegramm empfangen wird und dieser Knoten mit demjenigen Knoten, von dem das Synchronisationstelegramm empfangen wurde, in Kommunikation treten möchte. Ebenso kann dies jedes Mal erfolgen wenn ein Knoten ein Synchronisationstelegramm absendet, oder auch erst wenn dieser von dem anderen Knoten nach der Absendung eine Antwort erhält.

Wird hingegen von einem der beiden bislang kommunizierenden Knoten nach einer begonnenen sowie gegebenenfalls abgebrochenen/unterbrochenen Funkkommunikation ein Resynchronisationstelegramm des anderen Knotens empfangen, so kann es erfindungsgemäß vorgesehen sein, dass der das Resynchronisationstelegramm empfangende, sowie ggfs. auch der sendende Knoten seinen bis dahin erreichten Kommunikationsstatus fortführt und nicht zurücksetzt, insbesondere wie dies bei einem Synchronisationstelegramm ansonsten der Fall wäre. Insbesondere kann es demnach vorgesehen sein, dass die interne Protokolluhr bzw. eine State-Machine weiterläuft, ein Timer z.B. weiterzählt oder ein Protokoll-Logbuch fortgeschrieben wird.

Sofern einer der beiden Knoten, z.B. der Datensammelknoten gegebenenfalls mit mehreren Knoten, z.B. Sensorknoten parallel kommunizieren kann, kann dies bedeuten, dass zumindest der Kommunikationsstatus bzw. die interne Protokolluhr / State-Machine / das Protokoll-Logbuch fortgeführt wird, der/die/das die Kommunikation mit demjenigen Knoten betrifft, zu dem die Kommunikation zwischenzeitlich unterbrochen wurde.

So sind die Daten, die erfindungsgemäß zwischen zwei Knoten vor dem Abbruch der Kommunikation ausgetauscht wurden, nicht verloren, sondern können, insbesondere im Datensammelknoten, gespeichert werden und nach einer erfolgten Resynchronisation ergänzt werden um die Daten, die nach der Resynchronisation in der fortgeführten Kommunikation ausgetauscht werden.

Hierbei kann es auch vorgesehen sein, dass das wenigstens eine auszusendende Resynchronisationstelegramm nicht nur Information zwecks einer Fortführung der Kommunikation umfasst, sondern sofort ergänzend auch Kommunikationsdaten, die für den Datenaustausch vorgesehen sind.

Hierbei kann es weiterhin vorgesehen sein, dass ein Synchronisationstelegramm, welches also kommunikationseinleitend ist, keine oder zumindest keine vollständige Information über die Adresse des das Synchronisationstelegramm sendenden Knotens im Sensornetzwerk umfasst. Dies hat wie eingangs erwähnt den Sinn und Zweck, dass ein Synchronisationstelegramm zur Kommunikationseinleitung möglichst kurz und damit möglichst energiesparend ausgeführt werden soll, um die Energiereserven eines Sensorknotens zu schonen.

Hier kann gegebenenfalls auf die Übermittlung einer Adressinformation vollständig verzichtet werden, da es im Sende- und Empfangsprotokoll zwischen zwei Knoten vorgesehen sein kann, dass ein Knoten nach Aussendung seines Synchronisationstelegramms unmittelbar im Anschluss auf Empfang geht für die Dauer einer vorbestimmten Zeit und die Kommunikation somit nur dann begonnen wird, wenn innerhalb dieses Empfangsfensters des Knotens ein anderer Knoten eine Antwort sendet, die die Bereitschaft zur Kommunikation signalisiert.

In diesem Augenblick der kommunikationseinleitenden Phase spielt es dabei keine Rolle, mit welchem Knoten, z.B. eines gesamten Sensornetzwerkes, der andere Knoten die Kommunikation begonnen hat, da in diesem Augenblick noch keine relevanten Daten übertragen wurden.

Hat jedoch eine Datenübertragung bereits stattgefunden und soll eine Resynchronisation nach Abbruch/Unterbrechung einer Kommunikationsverbindung wieder aufgenommen werden, so ist es notwendig, dass die nach einer Resynchronisation empfangenen Daten eindeutig denjenigen Knoten zugeordnet werden können, zu denen die Verbindung zuvor abgebrochen ist.

Daher kann es erfindungsgemäß vorgesehen sein, dass ein Resynchronisationstelegramm eine Adressinformation des sendenden Knotens umfasst. So kann im Sende- und Empfangsprotokoll zwischen zwei Knoten, insbesondere einem Sensor- und einem Datensammelknoten, somit sichergestellt werden, dass nicht nur eine abgebrochene Datenübertragung wieder aufgenommen wird, sondern dass die Aufnahme der Datenübertragung auch zwischen den richtigen Knoten erfolgt. Aus diesem Grund kann es auch, wie zuvor genannt, vorgesehen sein, dass ein Resynchronisationstelegramm zugleich auch Kommunikationsdaten umfasst, da die Wahrscheinlichkeit groß ist, dass ein Resynchronisationstelegramm von demjenigen Konten ausgesendet wird, zu dem unmittelbar zuvor die Kommunikation abgebrochen ist.

Das Bereitstellen von Adressinformation in einem Resynchronisationstelegramm kann insbesondere dann relevant werden, wenn es in einer weiteren bevorzugten Ausführung vorgesehen ist, dass ein Knoten, z.B. ein Datensammelknoten während der Dauer einer Kommunikation, insbesondere auch einer fortgesetzten Kommunikation nach Empfang wenigstens eines Resynchronisationstelegramms, und hier insbesondere in den Sendepausen, weitere Kommunikationen auch mit anderen Knoten, z.B. Sensorknoten durchführen kann, die gegebenenfalls ebenfalls abbrechen und wieder aufgenommen werden. So kann ein Knoten fähig sein während der Dauer einer fortgesetzten Kommunikation mit einem bestimmten Knoten, insbesondere in den Sendepausen, ein zeitliches Empfangsfenster zu öffnen zum Empfang von Synchronisationstelegrammen oder Resynchronisationstelegrammen anderer weiterer Knoten.

So kann ein Knoten, beispielsweise ein Datensammelknoten ein zeitliches Empfangsfenster öffnen zum Empfang von Synchronisationstelegrammen anderer Knoten, z.B. Sensorknoten, selbst wenn dieser noch mit einer ursprünglichen oder fortgesetzten anderen Kommunikation beschäftigt ist. Durch die Hinzufügung von Adressinformationen in die Resynchronisationstelegramme bleibt somit gewährleistet, dass nach einer Resynchronisation und Wiederaufnahme der Datenübertragung die empfangenen Daten jeweils den richtigen Knoten zugeordnet werden.

Unabhängig davon ob ein Knoten, z.B. Datensammelknoten nur mit einem anderen Knoten, z.B. Sensorknoten oder gegebenenfalls mit mehreren Knoten, z.B. mehreren Sensorknoten gleichzeitig bzw. mit leichtem zeitlichen Versatz kommunizieren kann, kann es vorgesehen sein, dass das wenigstens eine Resynchronisationstelegramm, gegebenenfalls auch eine Folge von Resynchronisationstelegrammen ausgesendet wird, zu einem verabredeten Zeitpunkt, zu dem der andere Knoten empfangsbereit ist. Hierbei kann sich der Zeitpunkt der Empfangsbereitschaft aus dem verwendeten Übertragungsprotokoll ergeben, welches bestimmte Zeiten vorsieht oder es kann vorgesehen sein, dass explizit zwischen zwei Knoten ein Zeitpunkt vereinbart wird, zu dem die Aussendung des wenigstens einen Resynchronisationstelegramms erfolgen soll.

Weiterhin kann es vorgesehen sein, dass die Aussendung eines Resynchronisationstelegramms durch einen Sensorknoten erst erfolgt, nachdem ein Energiespeicher in einem Sensorknoten erneut mit Energie geladen wurde, insbesondere aus einer internen Batterie. Eine derartige Ausführung wird insbesondere dann vorteilhaft sein, wenn der Abbruch der Funkkommunikation durch Erschöpfung eines Energiespeichers im Sensorknoten stattgefunden hat.

Hat hingegen der Abbruch der Kommunikation stattgefunden aufgrund von Funkbedingungen, die sich nachteilig entwickelt haben, so kann es auch vorgesehen sein, dass die Aussendung eines Resynchronisationstelegramms unmittelbar erfolgt, insbesondere dann, wenn ein Knoten im Rahmen des Datenübertragungsprotokolls feststellt, dass innerhalb einer vorgegebenen Zeitspanne, insbesondere einer handshake-Zeitspanne, keine Antwort des anderen Knotens erfolgt.

Erfindungsgemäß ist es vorgesehen, dass die Aussendung von dem wenigstens einen Resynchronisationstelegramm, gegebenenfalls auch einer Gruppe von Resynchronisationstelegrammen erfolgt, wenn eine nicht vollendete Kommunikation festgestellt wird. Um eine nicht vollendete Kommunikation festzustellen, kann es vorgesehen sein, dass ein Knoten, z.B. ein Sensorknoten überprüft, ob er alle seine Soll-Sendedaten, d.h. solche Daten, die für die Versendung an einen anderen Knoten, z.B. einen Datensammelknoten vorgesehen sind, vollständig absenden konnte. Ist dies der Fall, so kann der Knoten darauf schließen, dass die Kommunikation vollständig durchgeführt wurde.

Da es jedoch vorgesehen sein kann, dass gegebenenfalls auch Daten bidirektional zwischen den Knoten, also z.B. von einem Datensammelknoten an einen Sensorknoten zu übertragen sind, kann die Beurteilung einer vollendeten Kommunikation nur anhand dieses vorgenannten Kriteriums gegebenenfalls nicht ausreichend sein.

So kann es in einer Weiterbildung der Erfindung auch vorgesehen sein, eine vollendete Kommunikation dadurch festzustellen, dass ein Knoten (z.B. Sensorknoten) einen vom dem anderen Knoten (z.B. Datensammelknoten) ausgesandten Schlussbefehl empfängt. Wird dieser Befehl empfangen, so kann der Knoten darauf schließen, dass die Kommunikation vollendet wurde.

Wird dieser Schlussbefehl hingegen nicht empfangen, insbesondere nicht innerhalb einer vorbestimmten Zeitdauer, so erhält der Knoten hierdurch indirekt durch das Ausbleiben des Schlussbefehls die Information, dass die Kommunikation nicht vollendet werden konnte und eine Resynchronisation durch Aussendung wenigstens eines Resynchronisationstelegramms nötig wird.

Hierbei kann es gegebenenfalls auch vorkommen, dass nach der Aussendung des wenigstens eines Resynchronisationstelegramms, gegebenenfalls auch einer Gruppe von Resynchronisationstelegrammen, die Kommunikation nicht unmittelbar wieder aufgenommen werden konnte, beispielsweise weil sich die Funkbedingungen weiterhin in einem schlechten Zustand befinden und somit die zwei Knoten sich weiterhin nicht erreichen können.

So kann es erfindungsgemäß vorgesehen sein, dass die Aussendung wenigstens eines Resynchronisationstelegramms wiederholt wird, zumindest bis dass eine erneute Kommunikation zwischen den Knoten aufgenommen wurde, bevorzugt solange, bis dass einer der Knoten einen Schlussbefehl vom anderen Knoten empfängt oder aber bis dass eine vorgegebene Anzahl von Sendewiederholungen durchgeführt wurde.

Hat nach einer solchen vorgegebenen Anzahl von Sendewiederholungen keine Wiederaufnahme der Kommunikation und/oder Empfang eines Schlussbefehls stattgefunden, so kann es vorgesehen sein, die Aussendung von Resynchronisationstelegrammen zu beenden, die Datenübertragung als solche zu verwerfen, d.h. als fehlerhaft einzustufen und dann von Anfang an, grundsätzlich wie es im Stand der Technik bekannt ist, wieder zu beginnen durch Aussendung eines Synchronisationstelegramms, insbesondere nach Ablauf der sich periodisch wiederholenden, insbesondere gleichen Zeitabständen.

Um gegenüber der vollständigen Wiederaufnahme von Anfang an mit der Aussendung von periodischen Synchronisationstelegrammen einen deutlichen Vorteil durch das erfindungsgemäße Verfahren zu erzielen, kann es in einer bevorzugten Weiterbildung vorgesehen sein, dass die Aussendung des wenigstens einen Resynchronisationstelegramms, gegebenenfalls auch einer Gruppe von Resynchronisationstelegrammen in kürzeren Zeitabständen erfolgt als die Aussendung von periodisch gesendeten Synchronisationstelegrammen.

So wird in jedem Fall sichergestellt, dass in einem Fall, wenn die Kommunikation wieder aufgenommen werden kann, diese innerhalb einer kürzeren Zeit vollständig beendet wird im Vergleich zu der Zeit, die benötigt würde, wenn erst nach einer Periodendauer zwischen zwei Synchronisationstelegrammen eine Kommunikation vollständig stattgefunden hätte.

In einer besonders bevorzugten Ausgestaltung des Verfahrens kann dieses eingesetzt werden in Liegenschaften, d.h. hier insbesondere Wohnungen von Mehrparteihäusern, bei denen die Knoten durch Sensorknoten gebildet werden können, z.B. durch Verbrauchserfassungsgeräte wie Wasserverbrauchserfassungsgeräte oder auch Gasverbrauchserfassungsgeräte oder Heizkostenverteiler, die in den Wohneinheiten einer Liegenschaft installiert sind oder zumindest der Liegenschaft zugeordnet sind, sofern sie außerhalb einer Liegenschaft installiert sind. Beispielsweise sind Heizkostenverteiler, d.h. Erfassungsgeräte für den Heizenergieverbrauch an Heizkörpern und/oder Heizleitungen innerhalb der Wohnungen installiert und registrieren, d.h. messen und speichern den Heizenergieverbrauch, um diesen für einen späteren Abruf und die Abrechnung durch einen Hausverwalter zur Verfügung zu stellen.

Hierbei kann es mit Bezug auf diese Ausführung auch weiterhin vorgesehen sein, dass ein Knoten gebildet wird durch ein mobiles Datensammelgerät, welches z.B. von einer Ableseperson durch eine Liegenschaft getragen wird. Ein solches mobiles Ablesegerät kann bei einer solchen Ausführung beispielsweise kontinuierlich auf Empfang stehen, um empfangsbereit zu sein für die Synchronisationstelegramme, die von den Sensorknoten der gesamten Liegenschaft ausgesendet werden. Die durch das mobile Datensammelgerät gesammelten Daten der einzelnen Sensorknoten werden zunächst innerhalb dieses mobilen Datensammelgerätes gespeichert und können im Anschluss daran an eine Datenverarbeitungsanlage zwecks Auswertung und Abrechnung übertragen werden. Hierbei kann es - wie genannt - vorgesehen sein, dass sowohl die Sensorknoten als auch ein mobiles Datensammelgerät Synchronisationstelegramme und Resynchronisationstelegramme aussenden kann.

In einer anderen Ausführung kann es auch vorgesehen sein, dass ein Knoten zumindest temporär durch einen Sensorknoten eines Funk-Sensornetzwerkes gebildet ist. Beispielsweise können hier alle Sensorknoten eines Funk-Sensornetzwerkes identisch ausgebildet sein, gegebenenfalls bis auf einen zentralen Datensammelknoten, wobei eine Kommunikationsverbindung nicht auf direktem Wege zwischen einem zentralen Datensammelknoten und jedem der Sensorknoten möglich ist.

In einem solchen Sensornetzwerk müssen die Sensorknoten in der Nachbarschaft eines Sensorknotens, der seine Daten übertragen möchte, als weiterleitende Netzwerkknoten arbeiten, d.h. als sogenannte Repeater. Im Sinne der Erfindung stellen derartige weiterleitende Sensorknoten zumindest temporär für die Dauer der Weiterleitung einen Datensammelknoten im Sinne der Erfindung dar. So wird sichergestellt, dass die zu versendenden Daten von Sensorknoten zu Sensorknoten weiter transportiert werden, insbesondere über verschiedene Hierarchieebenen des Sensornetzwerkes hinweg, bis dass die Daten zu einem zentralen Datensammelknoten weitergeleitet sind und in diesem für einen späteren Abruf gespeichert werden. In dem Fall, dass sämtliche Sensorknoten eines Funk-Sensornetzwerkes unmittelbaren Funkkontakt zu einem zentralen Datensammelknoten haben, kann dieser unmittelbar einen Datensammelknoten im Sinne der Erfindung bilden.

In einer wiederum weiteren Ausführung der Erfindung, die mit allen vorherigen kombinierbar ist, kann es auch vorgesehen sein, dass ein dritter bislang in der Kommunikation unbeteiligter Knoten den Empfang eines Resynchronisationstelegramms zum Anlass nimmt, selbst eine Kommunikation zu beginnen, insbesondere wenn es für diesen dritten Knoten im Rahmen der regelmäßigen periodischen Aussendung von Synchronisationstelegrammen bisher nicht möglich war, eine Kommunikation zu beginnen, z.B. weil von dem dritten Knoten ausgesendete Synchronisationstelegramme nicht erwidert wurden, da sie für andere Knoten nicht empfangbar waren oder weil dieser dritte Knoten selbst keine Synchronisationstelegramme von anderen Knoten empfangen konnte. Diese Bedingungen können sich z.B. ergeben, wenn für den betroffenen dritten Knoten keine ausreichenden Sende- und/oder Empfangsbedingungen vorherrschten.

Empfängt ein solcher dritter Knoten jedoch ein Resynchronisationstelegramm, so ist für diesen dritten Knoten zumindest erkennbar, dass grundsätzlich eine Kommunikation zu demjenigen Knoten möglich wäre, von welchem das Resynchronisationstelegramm ausgesendet wurde.

Wurde ein Resynchronisationstelegramm z.B. von einem datensammelnden Knoten ausgesendet, um eine abgebrochene Kommunikation weiterzuführen, so kann der dritte Knoten auf den Empfang des eigentlich für ihn nicht vorgesehenen Resynchronisationstelegramms z.B. derart reagieren, dass dieser dritte Knoten ein Synchronisationstelegramm aussendet, um ebenfalls eine Kommunikation mit dem datensammelnden Knoten aufzubauen.

Wurde eine Resynchronisationstelegramm von einem datensendenden Knoten ausgesendet, um eine abgebrochene Kommunikation weiterzuführen, so kann der dritte Knoten auf den Empfang des eigentlich für ihn nicht vorgesehenen Resynchronisationstelegramms z.B. derart reagieren, dass dieser dritte Knoten ein Synchronisationstelegramm aussendet, um eine Kommunikation mit dem datensendenden Knoten aufzubauen, insbesondere um die Kommunikation mit diesem Knoten zu verwenden, um die eigenen Daten, die von dem Dritten Knoten gesendet werden sollen weiterleiten zu lassen an einen datenempfangenden Knoten.

Für beide oben genannten Fälle kann sich ein dritter Knoten auch derart verhalten, dass dieser erst den mehrfachen Empfang eines Resynchronisationstelegramm, dass nicht für ihn vorgesehen ist, zum Anlass nimmt, selbst eine Kommunikation zu beginnen, z.B. wie oben beschrieben durch Aussendung eines eigenen Synchronisationstelegramms, um eine Kommunikation zu initiieren.

Es kann in anderer Ausführung auch vorgesehen sein, nach mehrfachen, insbesondere wenigstens zweifachen Empfang eines Resynchronisationstelegramms zu nutzen, um anstelle des eigentlich gemeinten Knotens die Kommunikation fortzuführen. Würden nämlich mehrfach von einem Knoten Resynchronisationstelegramme ausgesendet, um eine Kommunikation mit einem bestimmten Knoten weiterzuführen, so kann der bislang unbeteiligte dritte Knoten daraus schließen, dass die Kommunikation zwischen diesen Knoten nicht wieder aufgenommen werden kann und der dritten Knoten kann ein Empfangsfenster des Knotens, welcher das Resynchronisationstelegramm versendet hat, nutzen, um selbst Daten, Informationen oder sonstiges, insbesondere in der Art eines Telegramms in dieses Empfangsfenster hinein zu senden.

So kann der dritte bislang unbeteiligte Knoten anstelle des eigentlich vorgesehenen Knoten die Kommunikation wiederaufnehmen, bzw. genau genommen übernehmen und insbesondere inhaltlich neu beginnen. Hierfür kann es vorgesehen sein, dass der dritte Knoten seine Adresse mit übersendet, um eine Zuordnung der Daten zu ermöglichen. Im Endeffekt reagiert ein dritter Knoten somit auf ein Resynchronisationstelegramm nach mehrfachem Empfang so, als wenn er ein Synchronisationstelegramm empfangen hätte.

In einer weiteren Anwendung kann es auch vorgesehen sein, dass ein Sensorknoten gebildet wird durch einen Ereignissensor, insbesondere einen Brandmeldesensor und/oder einen Einbruchmeldesensor. Beispielsweise können auf diese Art und Weise Funkalarmanlagen aufgebaut werden, die keine Verkabelung zwischen den Ereignissensoren benötigen.

Auch hier kann das erfindungsgemäße Verfahren eingesetzt werden, um auf zuverlässige Art und Weise ein festgestelltes Ereignis z.B. zu einer Einbruchmeldezentrale zu kommunizieren, wobei die Einbruchmeldezentrale z.B. einen Datensammelknoten im Sinne der Erfindung darstellen kann. Auch hier kann es vorgesehen sein, dass Ereignissensoren neben ihrer Eigenschaft, Ereignisse festzustellen, auch zur Weiterleitung von Daten anderer Ereignissensoren eingesetzt werden. Im Zeitpunkt der Weiterleitung der Daten bildet ein solcher Ereignissensor ebenfalls einen Datensammelknoten im Sinne der Erfindung.

Der bekannte Stand der Technik sowie ein Ausführungsbeispiel der Erfindung ist in den nachfolgenden Figuren näher erläutert. Es zeigen:
- Figur 1: die typische Kommunikation zwischen einem ersten Knoten und einem zweiten Knoten gemäß dem Stand der Technik
- Figur 2: die Kommunikation gemäß der Erfindung

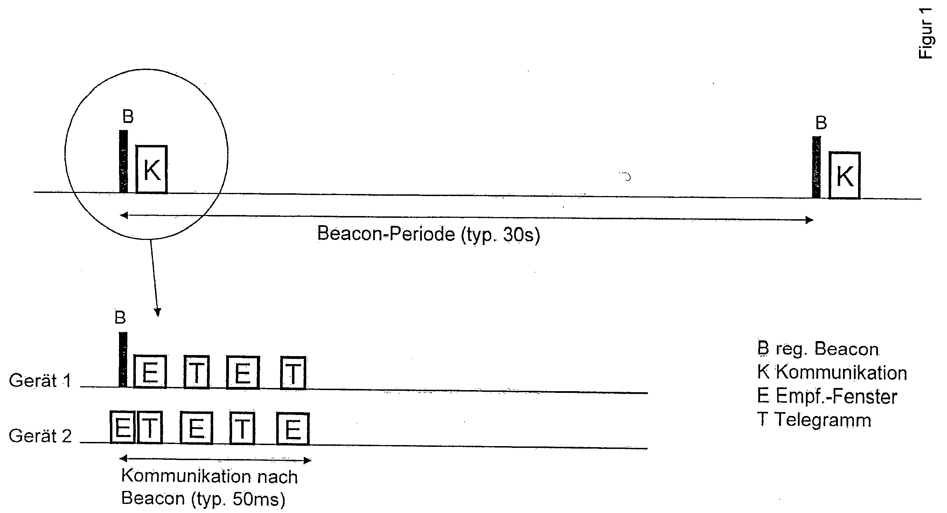

Die Figur 1 zeigt hier in einer übersichtlichen Darstellung die Kommunikation zwischen einem ersten Knoten 1 und einem zweiten Knoten 2
anhand der jeweils durchgeführten Funkaktionen. Hierbei kann der Knoten 1 durch einen Sensorknoten und der Knoten 2 durch einen Datensammelknoten gebildet sein oder umgekehrt.

Erkennbar ist hier der im Stand der Technik bekannte Fall, dass ein Knoten 1, z.B. ein Heizkostenverteiler, periodisch nach bestimmten Zeitabständen, hier typisch 30 Sekunden, ein Synchronisationstelegramm B aussendet, welches hier auch als Beacon B bezeichnet wird, um sodann nach Aussendung eines solchen Synchronisationstelegramms B eine Kommunikation mit einem Datensammelknoten 2, z.B. auch einen anderen temporär als Datensammelknoten arbeitenden Sensorknoten durchzuführen.

Diese Kommunikation zwischen einem Knoten 1 und einem Knoten 2, d.h. hier im Sinne der Erfindung z.B. zwischen einem Sensorknoten 1 und einem Masterknoten 2 (oder umgekehrt), ist weiterhin im Detail dargestellt. Erkennbar ist hier in der zeitlichen Abfolge durch die Übereinanderanordnung der Funkaktionen, dass die Aussendung eines Synchronisationstelegramms B des Knotens 1 mit einem Empfangsfenster E des Knotens 2 zusammenfällt.

Ist dies der Fall, so wird die Aussendung des Synchronisationstelegramms B durch den Knoten 2 erfasst und dieser Knoten 2 antwortet hierauf durch die Aussendung T, die zeitlich zusammenfällt mit einem vom Knoten 1 unmittelbar nach der Aussendung des Synchronisationstelegramms B geöffneten Empfangsfensters E.

Durch diese einleitende Kommunikation können die beiden Knoten 1 und 2 sich aneinander synchronisieren, also beispielsweise interne Protokolluhren bzw. State-Machines rücksetzen, um einen Datenaustausch durchzuführen, der im Anschluss daran erfolgt, durch Aussendung der Daten im Zeitfenster T, welches gemäß dem durchgeführten Protokoll sodann mit einem Empfangsfenster E seitens des Masterknotens 2 zusammenfällt, welcher sodann in einem Sendefenster T Daten oder Bestätigungen übersendet, die wiederum mit einem Empfangsfenster E seitens des Sensorknotens 1 übereinstimmt.

So erfolgt ein gegenseitiger Austausch von Daten, bis dass eine Kommunikation beendet ist und alle notwendigen Daten übertragen wurden. Hierbei kann sowohl eine Datenübertragung vom Knoten 1 zum Knoten 2 als auch in umgekehrter Richtung stattfinden. Die Kommunikation kann somit bidirektional sein. Sollte sich hier das Problem ergeben, dass die Kommunikation, die hier typisch innerhalb von 50 Millisekunden erfolgen kann, abbricht, beispielsweise durch geänderte Funkbedingungen oder nicht ausreichende Energie o.ä., so kann die Kommunikation K erst dann wiederholt werden, wenn der Knoten 1 nach der hier dargestellten Periode, d.h. typisch 30 Sekunden, erneut ein Synchronisationstelegramm B übersendet.

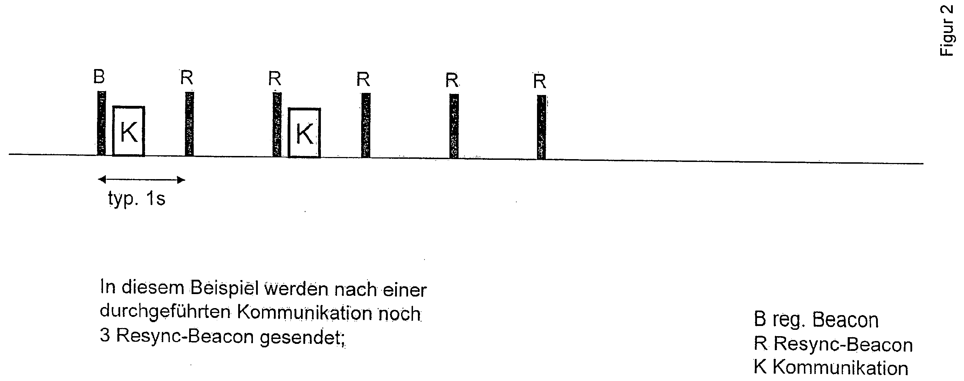

Erfindungsgemäß ist es, wie in der Figur 2 dargestellt, vorgesehen, dass in dem Fall eines Kommunikationsabbruchs oder einer Unterbrechung nach der ursprünglichen Aussendung eines kommunikationseinleitenden Synchronisationstelegramms B und einer begonnenen Kommunikation K wenigstens ein Resynchronisationstelegramm R, hier insgesamt 5 Resynchronisationstelegramme R, ausgesendet werden. Die zeitliche Abfolge zwischen den einzelnen Resynchronisationstelegrammen R oder auch zwischen Gruppen von Resynchronisationstelegrammen R, was hier jedoch nicht dargestellt ist, ist geringer als die zeitliche Periode zwischen zwei Synchronisationstelegrammen B.

In diesem hier dargestellten Beispiel ist die Abfolge zwischen den Resynchronisationstelegrammen R beispielsweise 1 Sekunde, wobei die Abfolge zwischen Synchronisationstelegramme B 30 Sekunden ist. In dem hier dargestellten Beispiel soll verdeutlicht werden, dass nach der ersten Aussendung eines Resynchronisationstelegramms R noch keine Aufnahme einer Kommunikation K stattfinden konnte. Z.B. sind die Funkbedingungen noch immer nicht besser geworden.

Ein Knoten 1, der dieses feststellt, wird daher weiterhin Resynchronisationstelegramme R aussenden, bis dass entweder die Kommunikation K wieder aufgenommen werden konnte oder aber die maximale Anzahl von Wiederholungen erreicht ist. In diesem Beispiel ist gezeigt, dass nach Aussendung des zweiten Resynchronisationstelegramms R die Kommunikation K wieder aufgenommen und jedoch auch dann noch nicht beendet werden konnte, da auch nach der Kommunikation K mit der Aussendung von Resynchronisationstelegrammen R fortgefahren wird. Die Kommunikationen K, wie sie hier in der Figur 2 dargestellt sind, können dabei an sich genauso ablaufen, wie es im Stand der Technik zwischen Knoten 1 und Knoten 2 bekannt ist, wie es zur Figur 1 näher erläutert ist.
Die hier und insbesondere in den Ansprüchen genannten Bezugszeichen sind nur beispielhaft zu verstehen und beschränken den Schutzgegenstand nicht.
Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen.

## Patentansprüche

1. Verfahren zur Durchführung einer Kommunikation zwischen wenigstens zwei Sensorknoten (1,2) einer Liegenschaft oder zwischen den Sensorknoten (1) einer Liegenschaft und wenigstens einem zumindest temporären Datensammelknoten (2), bei dem einer der Knoten (1), insbesondere in im wesentlichen periodischen gleichen Zeitabständen, wenigstens ein Synchronisationstelegramm (B) aussendet, und wenigstens ein anderer Knoten (2) ein Synchronisationstelegramm (B) empfängt, insbesondere durch Öffnen eines zeitlichen Empfangsfenster (E) für den Empfang von Synchronisationstelegrammen (B), wonach zwischen den Knoten (1,2) eine bidirektionale Funkkommunikation (K) erfolgt, **dadurch gekennzeichnet, dass** bei einer nicht vollendeten Funkkommunikation (K) einer der Knoten (1) wenigstens ein Resynchronisationstelegramm (R) aussendet, um die Kommunikation mit dem anderen Knoten (2) wieder aufzunehmen.

2. Verfahren nach Anspruch 1, **dadurch gekennzeichnet, dass** das wenigstens eine Resynchronisationstelegramm (R) von dem Knoten (1) ausgesendet wird, welcher zur Kommunikationseinleitung zuvor das wenigstens eine Synchronisationstelegramm (B) gesendet hat.

3. Verfahren nach Anspruch 1, **dadurch gekennzeichnet, dass** das wenigstens eine Resynchronisationstelegramm von dem Knoten ausgesendet wird, welcher zur Kommunikationseinleitung zuvor das wenigstens eine Synchronisationstelegramm empfangen hat.

4. Verfahren nach einem der vorherigen Ansprüche, **dadurch gekennzeichnet, dass** das wenigstens eine Resynchronisationstelegramm (R) ausgesendet wird, zu einem verabredeten Zeitpunkt, zu dem der andere Knoten (2) empfangsbereit ist, insbesondere wobei sich der Zeitpunkt aus dem verwendeten Übertragungsprotokoll ergibt oder explizit vereinbart wird.

5. Verfahren nach einem der vorherigen Ansprüche, **dadurch gekennzeichnet, dass** eine vollendete Kommunikation (K) von einem Knoten (1) dadurch erkannt wird, dass die Daten, die für die Versendung an den anderen Knoten vorgesehen waren, vollständig abgesendet wurden.

6. Verfahren nach einem der vorherigen Ansprüche, **dadurch gekennzeichnet, dass** eine vollendete Kommunikation (K) von einem Knoten (1) dadurch erkannt wird, dass dieser einen Schlussbefehl vom anderen Knoten (2) empfängt.

7. Verfahren nach einem der vorherigen Ansprüche, **dadurch gekennzeichnet, dass** die Aussendung wenigstens eines Resynchronisationstelegramms (R) wiederholt wird bis dass der die Resynchronisationstelegramme (R) sendende Knoten (1) einen Schlussbefehl vom anderen Knoten (2) empfängt oder bis dass eine vorgegebene Anzahl von Sendewiederholungen durchgeführt wurde.

8. Verfahren nach einem der vorherigen Ansprüche, **dadurch gekennzeichnet, dass** das die Aussendung des wenigstens einen Resynchronisationstelegramms (R) in kürzeren Zeitabständen erfolgt als die Aussendung von periodisch gesendeten Synchronisationstelegrammen (B).

9. Verfahren nach einem der vorherigen Ansprüche, **dadurch gekennzeichnet, dass** ein Synchronisationstelegramm (B) keine oder zumindest keine vollständige Information über die Adresse des das Synchronisationstelegramm (B) sendenden Knotens (1) umfasst und ein Resynchronisationstelegramm (R) eine Adresse des das Resynchronisationstelegramm (R) sendenden Knotens (1) umfasst.

10. Verfahren nach einem der vorherigen Ansprüche, **dadurch gekennzeichnet, dass** ein Resynchronisationstelegramm (R) zu übertragende Kommunikationsdaten umfasst.

11. Verfahren nach einem der vorherigen Ansprüche, **dadurch gekennzeichnet, dass** durch den Empfang eines Synchronisationstelegramms (B) der das Synchronisationstelegramm (B) empfangende Knoten (2) in einen den Kommunikationsbeginn kennzeichnenden Status versetzt wird, insbesondere eine interne Protokoll-Uhr oder State-Machine rückgesetzt wird.

12. Verfahren nach einem der vorherigen Ansprüche, **dadurch gekennzeichnet, dass** durch den Empfang eines Resynchronisationstelegramms (R) der das Resynchronisationstelegramm (R) empfangende Knoten (2) seinen bis dahin erreichten Kommunikationsstatus fortführt, insbesondere eine interne Protokoll-Uhr oder State-Machine weiterläuft.

13. Verfahren nach einem der vorherigen Ansprüche, **dadurch gekennzeichnet, dass** ein Knoten (2) während der Dauer einer fortgesetzten Kommunikation, insbesondere in den Sendepausen, ein zeitliches Empfangsfenster öffnet zum Empfang von Synchronisationstelegrammen oder Resynchronisationstelegrammen anderer Knoten (1).

14. Verfahren nach einem der vorherigen Ansprüche, **dadurch gekennzeichnet, dass** ein dritter bislang in der Kommunikation unbeteiligter Knoten den insbesondere mehrfachen Empfang eines Resynchronisationstelegramms zum Anlass nimmt, selbst eine Kommunikation zu beginnen.

15. Verfahren nach einem der vorherigen Ansprüche, **dadurch gekennzeichnet, dass** der eine Knoten (1) gebildet wird durch einen Sensorknoten, insbesondere ein Verbrauchsmessgerät, das in einer Liegenschaft installiert ist.

16. Verfahren nach Anspruch 15, **dadurch gekennzeichnet, dass** der andere Knoten (2) gebildet wird durch ein mobiles Datensammelgerät, insbesondere welches von einer Ableseperson durch eine Liegenschaft getragen wird.

17. Verfahren nach Anspruch 15, **dadurch gekennzeichnet, dass** der andere Knoten (2) zumindest temporär durch einen Sensorknoten eines Funk-Sensornetzwerkes gebildet ist, insbesondere der zumindest zeitweise zur Datenweiterleitung zu einem zentralen Datensammelknoten vorgesehen ist.

18. Verfahren nach Anspruch 15 bis 17, **dadurch gekennzeichnet, dass** ein Knoten (2) gebildet wird durch einen zentralen Datensammelknoten innerhalb eines Funk-Sensornetzwerkes.

19. Verfahren nach einem der vorherigen Ansprüche 1 bis 14, **dadurch gekennzeichnet, dass** ein Knoten (1,2) gebildet wird durch einen Ereignissensor, insbesondere einen Brandmeldesensor und/oder einen Einbruchmeldesensor.

## Claims

1. Method for performing a communication between at least two sensor nodes (1, 2) on a property or between the sensor nodes (1) on a property and at least one at least temporary data collection node (2), in which one of the nodes (1), particularly at essentially periodic identical intervals of time, transmits at least one synchronization message (B), and at least one other node (2) receives a synchronization message (B), particularly by opening a temporal reception window (E) for reception of synchronization messages (B), after which a bidirectional radio communication (K) takes place between the nodes (1, 2), **characterized in that** when a radio communication (K) is not complete, one of the nodes (1) transmits at least one resynchronization message (R) in order to resume communication with the other node (2).

2. Method according to Claim 1, **characterized in that** the at least one resynchronization message (R) is transmitted by the node (1) that has previously sent the at least one synchronization message (B) for the purpose of initiating communication.

3. Method according to Claim 1, **characterized in that** the at least one resynchronization message is transmitted by the node that has previously received the at least one synchronization message for the purpose of initiating communication.

4. Method according to one of the preceding claims, **characterized in that** the at least one resynchronization message (R) is transmitted at an agreed time at which the other node (2) is ready to receive, particularly wherein the time is obtained from the transmission protocol used or is arranged explicitly.

5. Method according to one of the preceding claims, **characterized in that** a completed communication (K) is identified by a node (1) by virtue of the data that were provided for sending to the other node having been sent completely.

6. Method according to one of the preceding claims, **characterized in that** a completed communication (K) is identified by a node (1) by virtue of said node receiving a concluding command from the other node (2).

7. Method according to one of the preceding claims, **characterized in that** the transmission of at least one resynchronization message (R) is repeated until the node (1) sending the resynchronization messages (R) receives a concluding command from the other node (2) or until a prescribed number of send repetitions has been performed.

8. Method according to one of the preceding claims, **characterized in that** the transmission of the at least one resynchronization message (R) is effected at shorter intervals of time than the transmission of periodically sent synchronization messages (B).

9. Method according to one of the preceding claims, **characterized in that** a synchronization message (B) comprises no or at least no complete information about the address of the node (1) sending the synchronization message (B), and a resynchronization message (R) comprises an address for the node (1) sending the resynchronization message (R).

10. Method according to one of the preceding claims, **characterized in that** a resynchronization message (R) comprises communication data that are to be transmitted.

11. Method according to one of the preceding claims, **characterized in that** reception of a synchronization message (B) prompts the node (2) receiving the synchronization message (B) to be transferred to a status denoting the start of communication, particularly prompts an internal protocol clock or state machine to be reset.

12. Method according to one of the preceding claims, **characterized in that** reception of a resynchronization message (R) prompts the node (2) receiving the resynchronization message (R) to continue its hitherto attained communication status, particularly prompts an internal protocol clock or state machine to continue.

13. Method according to one of the preceding claims, **characterized in that** a node (2) opens a temporal reception window during the period of a continued communication, particularly in the breaks in sending, in order to receive synchronization messages or resynchronization messages from other nodes (1).

14. Method according to one of the preceding claims, **characterized in that** a third node, hitherto uninvolved in the communication, uses the particularly repeated reception of a resynchronization message as an opportunity to begin a communication itself.

15. Method according to one of the preceding claims, **characterized in that** one node (1) is formed by a sensor node, particularly a consumption meter that is installed on a property.

16. Method according to Claim 15, **characterized in that** the other node (2) is formed by a mobile data collection device, particularly one carried through a property by a person taking readings.

17. Method according to Claim 15, **characterized in that** the other node (2) is at least temporarily formed by a sensor node in a radio sensor network, particularly one at least intermittently provided for forwarding data to a central data collection node.

18. Method according to Claims 15 to 17, **characterized in that** a node (2) is formed by a central data collection node within a radio sensor network.

19. Method according to one of the preceding Claims 1 to 14, **characterized in that** a node (1, 2) is formed by an event sensor, particularly a fire alarm sensor and/or a burglar alarm sensor.

## Revendications

1. Procédé d'établissement d'une communication entre au moins deux noeuds capteurs (1, 2) d'un bâtiment ou entre les noeuds capteurs (1) d'un bâtiment et au moins un noeud de collecte de données temporaire (2), dans lequel l'un des noeuds (1), notamment, au cours d'intervalles de temps égaux sensiblement périodiques, émet au moins un télégramme de synchronisation (B), et au moins un autre noeud (2) reçoit un télégramme de synchronisation (B), notamment par ouverture d'une fenêtre de réception temporelle (E) pour la réception de télégrammes de synchronisation (B), une communication radio bidirectionnelle (K) étant ensuite effectuée entre les noeuds (1, 2), **caractérisé en ce que** l'un des noeuds (1) émet au moins un télégramme de resynchronisation (R) lorsqu'une communication radio (K) n'est pas achevée afin de reprendre la communication avec les autres noeuds (2).

2. Procédé selon la revendication 1, **caractérisé en ce que** l'au moins un télégramme de resynchronisation (R) est émis par le noeud (1) qui a émis ledit au moins un télégramme de synchronisation (B) pour l'établissement d'une communication.

3. Procédé selon la revendication 1, **caractérisé en ce que** ledit au moins un télégramme de resynchronisation est émis par le noeud qui a préalablement reçu ledit au moins un télégramme de synchronisation pour l'établissement d'une communication.

4. Procédé selon l'une quelconque des revendications précédentes, **caractérisé en ce que** ledit au moins un télégramme de resynchronisation (R) est émis à un instant convenu lors duquel l'autre noeud (2) est prêt pour la réception, notamment dans lequel ledit instant est obtenu à partir du protocole de transmission utilisé ou est convenu de manière explicite.

5. Procédé selon l'une quelconque des revendications précédentes, **caractérisé en ce qu'**une communication achevée (K) est identifiée par un noeud (1) par le fait que les données ayant été prévues pour être envoyées à l'autre noeud ont été entièrement émises.

6. Procédé selon l'une quelconque des revendications précédentes, **caractérisé en ce qu'**une communication achevée (K) est identifiée par un noeud (1) par le fait que celui-ci reçoit une instruction de fermeture de l'autre noeud (2).

7. Procédé selon l'une quelconque des revendications précédentes, **caractérisé en ce que** l'émission d'au moins un télégramme de resynchronisation (R) est répétée jusqu'à ce que le noeud (1) émettant le télégramme de resynchronisation (R) reçoive une instruction de fermeture de l'autre noeud (2), ou jusqu'à ce qu'un nombre prédéterminé de répétitions d'émission a été effectué.

8. Procédé selon l'une quelconque des revendications précédentes, **caractérisé en ce que** l'émission dudit au moins un télégramme de resynchronisation (R) est effectuée à des intervalles de temps plus courts que l'émission de télégrammes de synchronisation (B) émis périodiquement.

9. Procédé selon l'une quelconque des revendications précédentes, **caractérisé en ce qu'**un télégramme de synchronisation (B) ne contient aucune ou pratiquement aucune information complète concernant l'adresse du noeud (1) émettant le télégramme de synchronisation (B) et **en ce qu'**un télégramme de resynchronisation (R) contient une adresse du noeud (1) émettant le télégramme de resynchronisation (R).

10. Procédé selon l'une quelconque des revendications précédentes, **caractérisé en ce qu'**un télégramme de resynchronisation (R) contient des données de communication à transmettre.

11. Procédé selon l'une quelconque des revendications précédentes, **caractérisé en ce que**, du fait de la réception d'un télégramme de synchronisation (B), le noeud (2) recevant le télégramme de synchronisation (B) est amené à passer dans un état caractérisant le début d'une communication, et plus particulièrement, **en ce qu'**une horloge de protocole interne ou un automate fini est réinitialisé.

12. Procédé selon l'une quelconque des revendications précédentes, **caractérisé en ce que**, du fait de la réception d'un télégramme de resynchronisation (R), le noeud (2) recevant le télégramme de resynchronisation (R) reste dans l'état de communication dans lequel il était antérieurement passé, notamment **en ce qu'**il maintient une horloge de protocole interne ou un automate fini.

13. Procédé selon l'une quelconque des revendications précédentes, **caractérisé en ce qu'**un noeud (2), pendant la durée d'une communication poursuivie, notamment au cours des pauses d'émission, ouvre une fenêtre de réception temporelle pour recevoir des télégrammes de synchronisation ou des télégrammes de resynchronisation d'autres noeuds (1).

14. Procédé selon l'une quelconque des revendications précédentes, **caractérisé en ce qu'**un troisième noeud n'ayant jusqu'à présent pas participé à la communication tire notamment profit de la réception effectuée plusieurs fois d'un télégramme de resynchronisation pour commencer lui-même une communication.

15. Procédé selon l'une quelconque des revendications précédentes, **caractérisé en ce que** ledit noeud (1) est formé par un noeud capteur, notamment un appareil consommateur qui est installé dans un bâtiment.

16. Procédé selon la revendication 15, **caractérisé en ce que** l'autre noeud (2) est formé par un appareil de collecte de données mobile qui est notamment porté par une personne effectuant un relevé de consommation dans un bâtiment.

17. Procédé selon la revendication 15, **caractérisé en ce que** l'autre noeud (2) est constitué au moins momentanément par un noeud capteur d'un réseau de capteurs radio qui est notamment prévu, au moins par instants, pour le réacheminement de données vers un noeud de collecte de données centralisé.

18. Procédé selon les revendications 15 à 17, **caractérisé en ce qu'**un noeud (2) est formé par un noeud de collecte de données centralisé au sein d'un réseau de capteurs radio.

19. Procédé selon l'une quelconque des revendications 1 à 14, **caractérisé en ce qu'**un noeud (1, 2) est formé par un capteur d'événement, notamment par un capteur d'alarme incendie et/ou par un capteur antieffraction.
